Europäisches Patentamt

European Patent Office

Office européen des brevets

(11) Publication number: **0 508 016 A1**

# EUROPEAN PATENT APPLICATION

(21) Application number: **91307537.0**

(22) Date of filing: **15.08.91**

(51) Int. Cl.5: **G02B 6/44**, H02G 1/08

(30) Priority: **10.04.91 JP 77909/91**
**11.06.91 JP 139286/91**

(43) Date of publication of application:
**14.10.92 Bulletin 92/42**

(84) Designated Contracting States:
**DE ES FR GB IT SE**

(71) Applicant: **Horii, Kiyoshi**
**No. 8-15-501 Kamimeguro 5-Chome**
**Meguro-ku**
**Tokyo(JP)**
Applicant: **TOA KIKAI KOGYO CO., LTD.**
**6-3, Higashimachi, Chofumatsuoda**

**Shimonoseki-shi, Yamaguchi(JP)**

(72) Inventor: **Horii, Kiyoshi**
**5-8-15-501 Kamimeguro Meguro-ku**
**Tokyo(JP)**
Inventor: **Ohsumi, Kakuji**
**9-6, Honmachi Chofumatsuoda**
**Shimonoseki-shi Yamaguchi(JP)**

(74) Representative: **Hall, Graeme Keith et al**
**Frank B. Dehn & Co. Imperial House 15-19**
**Kingsway**
**London WC2B 6UZ(GB)**

(54) **Cabel or fiber installation device.**

(57) In a Coanda spiral flow unit installation device, a Coanda flow supply device (11) for the supply of a conducting wire or an induction wire is provided at the suction and induction port (6) through which the conducting wire (7) or the induction wire is induced. A feeding device (13) is disposed on the outer side thereof. This device permits more stable installation at high speed and high efficiency. It is possible to install a thin optical fiber over a long distance.

Fig. 3

The present invention relates to a wire or an induction wire installation device, more specifically to a wire or an induction wire installation device which permits easy and highly efficient installation of an optical fiber, cable, etc., even through a conducting-wire thin tube having numerous bends and extending over 100m and a drum-rolled thin tube with an overall length of 1000m or longer.

It has been conventionally a common practice to install a conducting wire or an induction wire through a pipeline or other small-diameter tube passage at office buildings, factories and communication facilities, and various installation means therefor have been developed. For instance, the installation means known include (a) the ones using compressed gas, such as air, inert gas, inactive gas, etc., and (b) others using no compressed gas. For the former means using compressed gas, the method of supplying compressed gas through a tube passage and force a conducting wire or an induction wire thereinto is known. As an example of the latter means, the method of forcing a conducting wire or an induction wire into a tube passage with polyethylene pipe by hand is known.

However, in the former method, there is a great restriction on the diameter of a tube, and the smaller the tube diameter, the more difficult it is to install a wire therethrough. As the diameter becomes larger, safety problems occur due to the increased pressure of compressed gas. In addition, in the case of installation over a long distance or for a tube with numerous bends and a drum-rolled tube, it becomes exceedingly difficult to install a wire due to its contact with the inner wall of the tube.

On the other hand, by the method using no compressed gas, a conducting wire is forced into a tube by human power, and accordingly such installation of a wire is in many cases difficult. Even when one can manage to install a wire over a short distance, it requires tremendous labor.

During recent years, there are increasing cases where an optical fiber is employed as conducting wire. By the conventional installation method, it was hard to install the fiber smoothly without any damage thereto, and by the method using a compressed gas, it was impossible to install an optical fiber with connection terminals attached thereto. For this reason, operators were forced to make connections between the ends of optical fibers using a microscope after the completion of the difficult installation operations. Such labor requirements were a great burden even on the experienced operators.

The inventor of the present invention has already proposed a new installation means which overcomes the above problems with the conventional installation method, and which permits easy installation of a wire even through a tube having numerous bends and extending as long as 100m or longer, or a drum-rolled thin tube with an overall length of 1000m. This apparatus operates on Coanda spiral flow.

The Coanda spiral flow has features that differences in velocity and density between the axial flow along which a fluid flows and its surroundings are great, and that it shows steeper velocity distribution, i.e., the degree of turbulence is 0.09, less than half of 0.2 for a turbulent flow, forming a different condition from the turbulent flow. It also has a feature that a synthesis of an axial vector and a radial vector results in peculiar spiral air flow.

Using the fact that this spiral air flow is a flow which converges along the tube axis in an in-tube flow, the method has been developed for installing a conducting wire at high efficiency and without any damage to the wire by use of this spiral air flow that is small in the degree of turbulence and can control severe contact with the inner wall of a tube due to the automatic vibration of the wire.

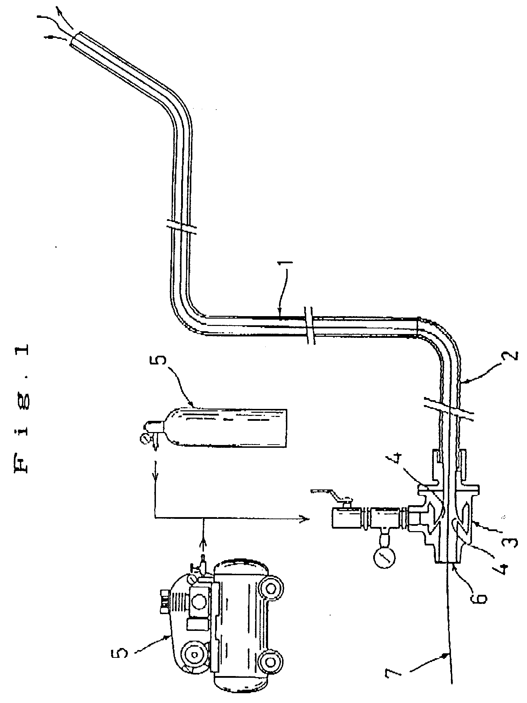

FIG. 1 is a schematic drawing of the known method and device for spiral air flow installation.

For instance, as shown in FIG. 1, a Coanda spiral air flow unit (3) is connected through a flexible hose (2) with a specified tube (1) for installing a conducting wire. To this Coanda spiral air flow unit (3), compressed gas is supplied in the wire installing direction of the tube (1) through Coanda slits (4) thereof using a compressed gas supply means (5). Under this condition, a specified conducting wire (7) is inserted into the suction and induction port (6) of the Coanda spiral air flow unit (3).

The conducting wire (7) is automatically carried with a spiral air flow in the flexible hose (2) and the tube (1), causing wire installation to proceed at high speed.

As compressed gas supply means (5), a cylinder of air, $N_2$ or other compressed gas, or an air compressor can be utilized. When a cylinder is used, it is acceptable if the cylinder can keep the supply pressure of compressed gas to the Coanda spiral air flow unit (3) at approximately 5 to 20 $Kg/cm^2$.

A typical example of the Coanda spiral flow unit (3) is the one in which an annular Coanda slit (4), the angled surface in the close vicinity thereof (9), and a distribution chamber of compressed gas (10) are provided between the connection port to a tube (8) and the suction and induction port (6) through which a conducting wire is introduced.

By making the angle of the angled surface (9) about 5 to 70°, a spiral flow occurs and an intense vacuum suction force is generated at the suction and induction port (6), thereby guiding a conducting wire (7) to be installed through the tube (1) at high speed with a Coanda spiral flow.

The foregoing installation method and the device therefor offer extremely excellent effectiveness and permit high-speed wire installation.

However, the subsequent studies by the inventors have revealed that there is something to be improved in the installation method and device using Coanda spiral flow. More specifically, in the foregoing installation system, the occurrence of the back flow of compressed gas at the suction and induction port (6) cannot be avoided entirely, and there occurs a vibration and waving of a conducting wire (7). To ensure more stable installation at high speed and over long distance, these problems must be solved.

The present invention has been accomplished to overcome the aforestated problems, and has the object of providing a new installation device which permits more stable installation of a wire at high speed and over long distance, and which also permits high-speed installation of optical fibers without any damage thereto.

In order to realize the above purposes, the present invention provides a Coanda spiral flow unit installation device comprising a tube connection port, an induction port for a conducting wire or an induction wire and a Coanda slit for the supply of compressed gas to generate Coanda spiral flow in a direction along the tube passage, in which a Coanda spiral flow supply device having a smaller inner diameter for supplying the conducting wire or the induction wire is provided at the induction port for the conducting wire or the induction wire.

Some embodiments of the invention will now be described by way of example and with reference to the accompanying drawings, in which:-

FIG. 1 shows a construction drawing of the installation method and the device therefore which the inventors of the present invention have already proposed. FIG. 2 shows a cross sectional view of the Coanda spiral flow unit applied therefor.

FIG. 3 shows a cross sectional view illustrating an embodiment of the present invention, and FIG. 4 shows a partially enlarged view thereof. FIGS. 5 and 6 show cross sectional views indicating other embodiments of the present invention.

FIGS. 7(a) and (b) show schematic drawings of the movement status of a conducting wire by the conventional method and by the one according to the present invention.

FIG. 8 shows measured data of the feed speed of an optical fiber and the feed distance as an embodiment of the present invention.

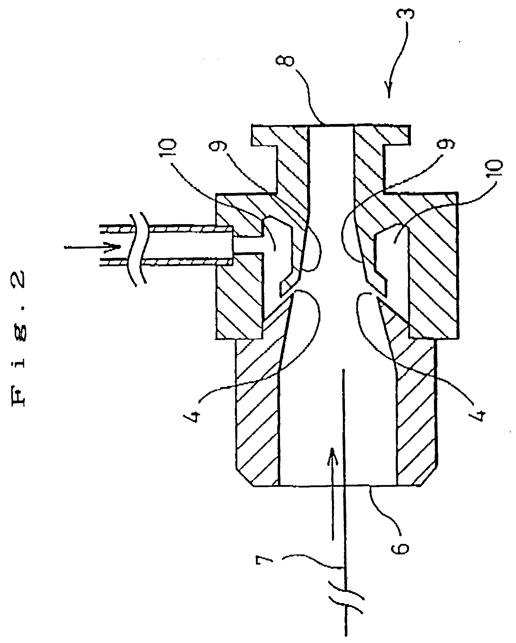

The present invention provides more stable wire installation at higher efficiency by providing a Coanda flow supply device for the supply of a conducting wire or an induction wire at the suction and induction port (6) of a Coanda spiral flow unit (3) as indicated in FIG. 2 and further preferably by providing a feed device or constructing this unit (3) in multiple stages.

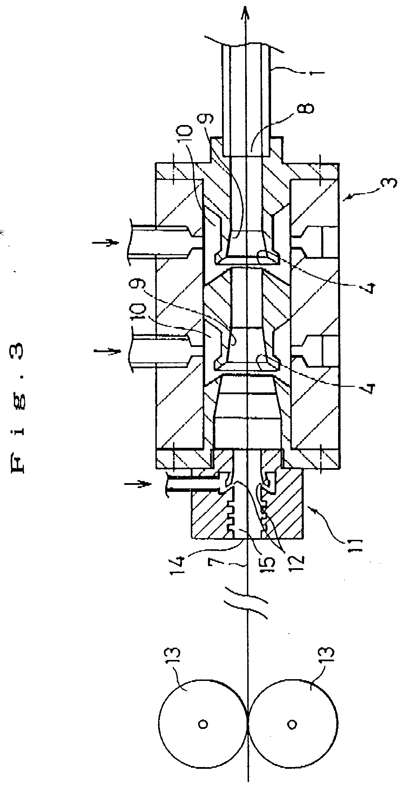

FIG. 3 indicates an example of the installation device according to the present invention.

As illustrated in FIG. 3, for example, in the installation device of the present invention, a Coanda spiral flow generating device is provided at the suction and induction port (6) of the Coanda spiral flow unit (3) as a Coanda flow supply device (11) having a smaller inner diameter, compressed air is introduced through Coanda slits (12) provided at the Coanda flow supply device (11) and supplied to the unit (3) while a conducting wire is fed out with a feeding device (13).

As illustrated in this example, in the installation device, a multiple-step unit is constructed by connecting the tube passage connecting port (8) of one unit to the suction and induction port (6) of another unit. A single unit construction may also be employed in this invention.

It is preferred that the Coanda flow supply device (11) possesses a smaller diameter than that of the suction and induction port (6) of the Coanda spiral flow unit (3), controlling the back flow of air and other pressurized gas, and to make the diameter of the induction port (14) slightly larger than that of a conducting wire (7).

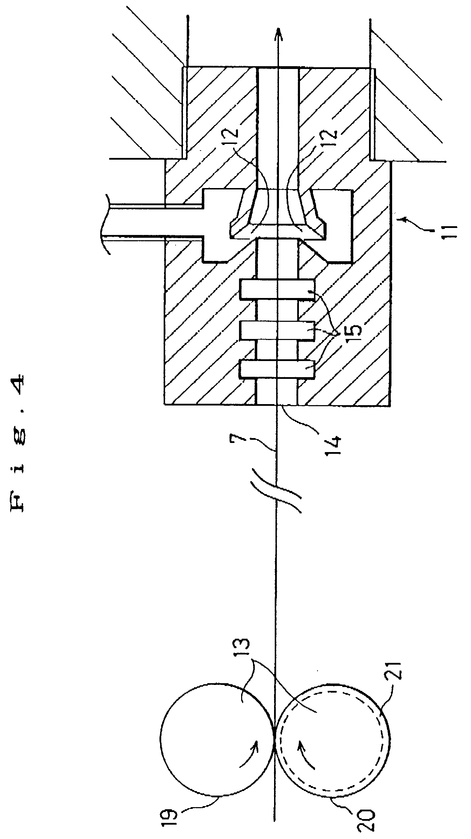

Furthermore, as depicted in FIG. 4 as an enlarged view, for a small-diameter Coanda flow supply device (11) for the suction and induction of the conducting wire (7), it is more advantageous to provide one or more annular grooves (15) to the end of the induction port (14) thereof at a location between port(14) and the annular Coanda slits (12). Such grooves (15) provide more effective control of the back flow of pressurized gas due to the so-called labyrinth effect.

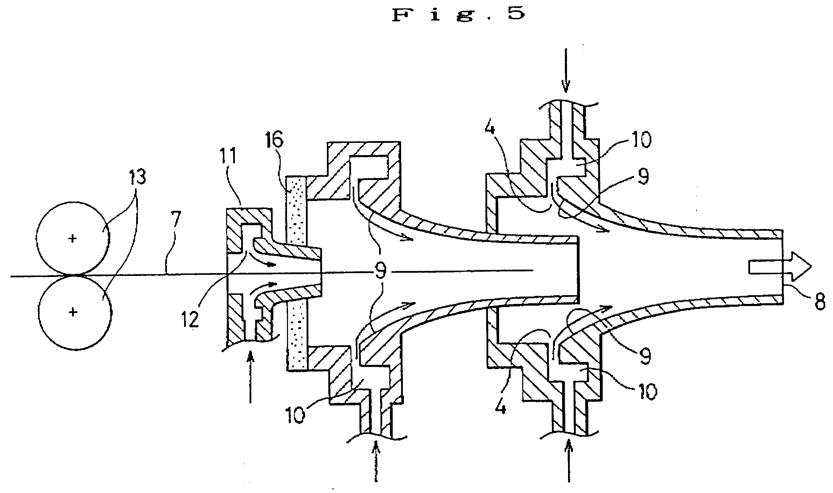

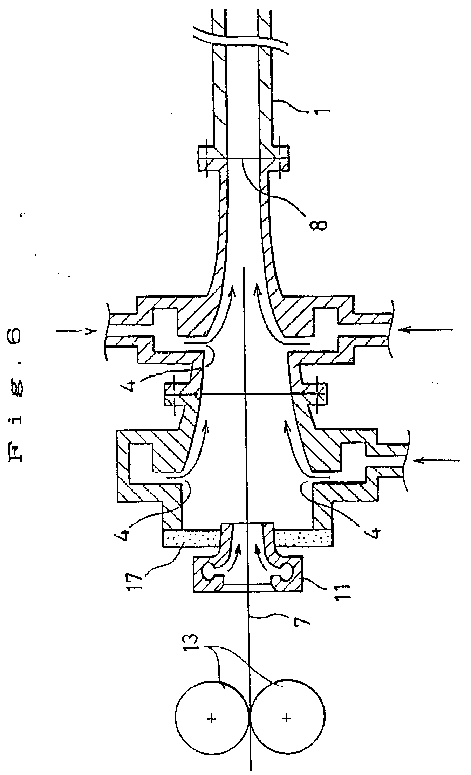

In either case, various configurations and structures may be defined for a multi-stage Coanda spiral flow unit (3), as indicated in FIGS. 5 and 6. The Coanda flow supply device (11) may be supported by a sealing plate (16) made up of a rubber resin rigid elastic plate, or an iron, stainless or other metal plate, or a laminated plate of these. A conduction tube may be used to insert between Coanda flow supply device (11) and Coanda spiral flow unit (3). A noise insulation device may be provided at the induction port (14) to reduce noises which occur during an installation operation. For the feeding device (13), a pair of rolls which rotate with the driving of a motor can feed a conducting wire (7) while it is being tensioned. At the edge surface of one or both rolls, a groove (21) may be provided. This groove (21) may be comprised of an elastic material. Use of such feeding device makes it possible to completely eliminate the vibration and waving of the conducting wire (7). A counter mechanism of the installation distance of the conducting wire (7) based on the measurements of the rpm of the rolls may be provided with this feeding device.

In the present invention, to install through a tube as long as 500m or more, a split-type Coanda spiral flow unit which can be provided halfway along the tube passage may be provided as a booster. This booster ensures continuance and stabilization of spiral flow for the wire installation.

A Coanda flow supply device (11) may be of a Coanda ring type.

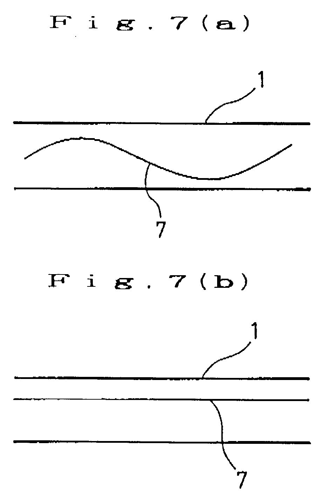

Moreover, in the present invention, it is possible to provide in a tube passage in the vicinity of a Coanda spiral flow unit, a sensor which detects the movement of a conducting wire or an induction wire and to control the feed speed of the feeding device (13). If there is a vibration of a conducting wire (7) or a waving of the tip, a stable installation is impeded. Accordingly, if any vibration or waving of a conducting wire (7) in a tube passage (1) as illustrated in FIG. 7(a) is detected with an optical fiber, the above provision reduces the feed speed of the feeding device (13) and corrects such vibration or waving so that the status in FIG. 7(b) is attained.

As has been described in detail, the present invention provides the following effect of operation and permits high-speed and stable installation of wires;

    a) To completely control the back flow at the Coanda spiral flow unit;
    b) To eliminate vibrations of a conducting wire;
    c) To remove waving of the wire tip.

Example 1

Actually using a Coanda spiral flow unit (3) comprised of two-stage unit as indicated in FIG. 3, with the diameters of the connection port (8) with the tube passage (1) at 8mm and the diameter of the induction port (12) of the Coanda flow supply device (11) at 2. 3mm as constructed in Fig. 4, a 1.8-mm diameter optical fiber was installed through a 1000m-long 6-mm diameter plastic tube (500m high-density polyethylene tube and 500m-long low-density polyethylene tube) rolled into a drum. This optical fiber weighs approximately 2g/m, and is comprised of a quartz fiber.

The angle of the annular slits was set at 20°C and compressed air with a pressure of $9kg/cm^2$ was introduced through the annular slits. As a result, an installation of the optical fiber through a 1000m tube was completed in about 50 minutes. There was no back flow, fiber pulsation, or damage to the optical fiber.

Similarly, attempts were made to install an optical fiber by the conventional method of introducing compressed air, but it proved practically impossible to install the fiber.

Example 2

Similarly as in Example 1, installing an optical fiber through a 500-m tube was done. As a result, such installation was completed in 10 minutes.

It took 30 to 40 minutes to do the same by the conventional method of introducing compressed air.

Example 3

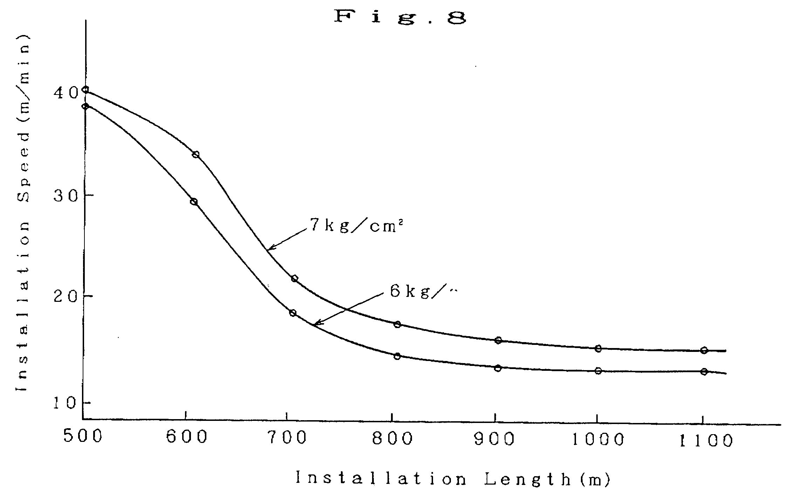

Similarly as in Example 1, the feed speed of an optical fiber at the tube with a length of 500m or longer when the fiber was installed through a 1200m-long tube with a compressed air of $6kg/cm^2$ and $7kg/cm^2$ was measured. The result as indicated in Fig. 8 was obtained.

This example shows the realization of installation at extremely high speed.

**Claims**

1. A Coanda spiral flow unit installation device for installing an elongate element in a tube passage, having a tube passage connection portion, an induction port for an elongate element such as a conducting wire or an induction wire, and a Coanda slit for the supply of compressed gas to generate Coanda spiral flow in a direction along the tube passage, in which a Coanda flow supply device having a smaller inner diameter than said induction port for the supply of said elongate element is provided at the said induction port.

2. An installation device as described in Claim 1, wherein a feeding device for said elongate element is provided on the outside of the Coanda flow supply device.

3. An installation device as described in Claims 1 and 2, wherein a Coanda flow supply device is provided at the induction port at the end of a plurality of Coanda spiral flow units in which a tube passage connecting port of one unit is connected to the induction port of another unit.

4. An installation device as described in Claims 1, 2 and 3, wherein an annular groove is provided adjacent the induction port of the Coanda flow supply device.

5. An installation device as described in Claims 1, 2, 3 and 4, wherein a noise insulating device is provided at the induction port of the Coanda flow supply device.

6. An installation device as described in any preceding Claim, wherein a split-type Coanda spiral flow unit is provided substantially halfway along the tube passage.

7. An installation device as described in any preceding Claim, wherein a sensor to detect the movement of said elongate element is provided in a tube passage in the vicinity of a Coanda spiral flow unit, and a mechanism to control the feed speed of a feeding device based on the signal from the sensor is provided.

Fig. 1

# Fig. 2

EP 0 508 016 A1

Fig.3

EP 0 508 016 A1

EP 0 508 016 A1

# Fig.4

Fig. 5

Fig.6

F i g . 7 ( a )

F i g . 7 ( b )

Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | PATENT ABSTRACTS OF JAPAN<br>vol. 13, no. 277 (E-778)26 June 1989<br>& JP-A-1 064 518 ( SUMITOMO ) 10 March 1989 | 1 | G02B6/44<br>H02G1/08 |
| A | * abstract * | 6 | |
| P,Y | DE-U-9 001 082 (WITTE GMBH) | 1 | |
| P,A | * figure 1 * | 4 | |
| A | PATENT ABSTRACTS OF JAPAN<br>vol. 13, no. 277 (E-778)26 June 1989<br>& JP-A-1 064 517 ( SUMITOMO ) 10 March 1989<br>* abstract * | 1 | |
| A | PATENT ABSTRACTS OF JAPAN<br>vol. 13, no. 277 (E-778)26 June 1989<br>& JP-A-1 064 515 ( SUMITOMO ) 10 March 1989<br>* abstract * | 1 | |
| A | Database " JAPAN TECHNOLOGY"<br>( UNIVERSITY MICROFILMS INTERNATIONAL<br>Ann Arbor, US) & JOURNAL OF THE JAPAN PETROLEUM<br>INSTITUTE, Vol 33, Iss 5, pp 291-298, Sept 1990<br>* abstract * | 1 | TECHNICAL FIELDS SEARCHED (Int. Cl.5 ) |
| A | PATENT ABSTRACTS OF JAPAN<br>vol. 12, no. 373 (C-534)6 October 1988<br>& JP-A-63 126 546 ( KIYOYUKI HORII ) 30 May 1988<br>* abstract * | 1 | G02B<br>H02G |
| A | PATENT ABSTRACTS OF JAPAN<br>vol. 12, no. 419 (M-760)8 November 1988<br>& JP-A-63 154 522 ( RES DEV CORP OF JAPAN ) 27<br>June 1988<br>* abstract * | 1,3 | |
| A | DE-A-3 707 970 (AEG KABEL)<br>* claims 1,8; figure * | 1,4 | |

-/--

The present search report has been drawn up for all claims

| Place of search | Date of completion of the search | Examiner |
|---|---|---|
| THE HAGUE | 31 JULY 1992 | WARD S.M. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | IEEE JOURNAL ON SELECTED AREAS IN COMMUNICATION. vol. 4, no. 5, August 1986, NEW YORK US HORNUNG ET AL: 'The Blown Fibre Cable' * figure 4 * | 1,2 | |
| | ----- | | |

TECHNICAL FIELDS SEARCHED (Int. Cl.5 )

The present search report has been drawn up for all claims

| Place of search | Date of completion of the search | Examiner |
|---|---|---|
| THE HAGUE | 31 JULY 1992 | WARD S.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P0401)